# EUROPEAN PATENT APPLICATION

(11) **EP 4 502 406 A1**
(43) Date of publication of application: **05.02.2025**
(21) Application number: 23780515.5
(22) Date of filing: 28.03.2023
(51) Int. Cl.: F16C 17/04, F16C 33/10

(54) **SLIDING COMPONENT**

(30) Priority: 30.03.2022 JP 2022055795
(71) Applicant: Eagle Industry Co., Ltd., Minato-ku Tokyo 105-8587 (JP)
(72) Inventor: YAMAMOTO Ryoma, Tokyo 105-8587 (JP); MURAKAMI Yasuhiro, Tokyo 105-8587 (JP)
(74) Representative: WSL Patentanwälte Partnerschaft mbB
(86) International application number: PCT/JP2023/012491
(87) International publication number: WO 2023/190506

(57) **Abstract**

A sliding component capable of stably maintaining its sliding surface in parallel to a sliding surface of the other sliding component is provided. In a sliding component 10 that is disposed at a relatively rotating position in a rotating machine 1 and slides relatively on a counterpart sliding component 30, a sliding surface 11 of the sliding component 10 is provided with a fluid introduction groove 12 configured to communicate with at least a side on which a fluid exists, and a dynamic pressure generation groove 13 configured to communicate with the fluid introduction groove 12 and extend in a circumferential direction, and the dynamic pressure generation groove 13 is provided with uneven portions 17 and 18 that repeatedly undulates toward its terminating end 13b.

## Description

### {TECHNICAL FIELD}

The present invention relates to a sliding component, for example, a sliding component that receives a load in a thrust direction.

### {BACKGROUND ART}

In the field of a rotating machine, it is known that sliding components that receive loads in a thrust direction, such as thrust bearings, are used. Such sliding components rotate relative to each other while its sliding surface is in contact with the sliding surface of the other sliding component arranged to face its sliding surface in a rotation state of a rotary member. Accordingly, the rotation of the rotary member is maintained while supporting the thrust force.

In recent years, there has been a desire to reduce the energy lost due to sliding for environmental measures and the like. Therefore, some sliding components that receive loads in the thrust direction are configured to allow a fluid to be introduced between sliding surfaces to form a fluid film in order to improve lubricity and reduce friction.

For example, a sliding component illustrated in Patent Citation 1 includes a plurality of deep grooves which are formed in an annular shape and extend in a radial direction and a shallow groove which communicates with the deep groove and extends toward a downstream side in a relative rotation direction. The deep groove communicates with each of an inner diameter side and an outer diameter side of a sliding surface. The shallow groove is formed so that its depth becomes shallower as it goes from the upstream side toward the downstream side in the relative rotation direction. Further, the shallow groove is formed so that its radial width becomes narrower from the upstream side toward the downstream side in the rotation direction.

Accordingly, while the rotary member rotates, a fluid inside the shallow groove is subjected to a shearing force in accordance with the relative rotation of the sliding surfaces and flows toward a downstream side in the relative rotation direction. The shallow groove becomes shallower and narrower as it goes toward the peripheral edge. Therefore, a dynamic pressure is generated at the peripheral edge of the shallow groove so that the fluid can be smoothly supplied between the sliding surfaces. Further, the fluid inside the deep groove is introduced into the shallow groove. Accordingly, it is possible to stably form a fluid film between the sliding surfaces.

### {CITATION LIST}

### {Patent Literature}

Patent Citation 1: JP 2008-144864 A (Page 4, FIG. 1)

### {SUMMARY OF INVENTION}

### {Technical Problem}

In the sliding component of Patent Citation 1, since a plurality of terminating edges located on the downstream side in the relative rotation direction of the shallow groove as the dynamic pressure generation region are locally arranged in the circumferential direction of the sliding surface, the height difference of the dynamic pressure generated in the circumferential direction is large. Accordingly, when an external force is applied to the sliding component, the rotation shaft, and the like so that the positions of the pair of sliding components are slightly moved by the external force, the dynamic pressure generation region of the shallow groove moves. As a result, there is concern that the sliding surface of the other sliding component may be relatively inclined with respect to the sliding surface of the sliding component.

The present invention has been made in view of such problems and an object thereof is to provide a sliding component capable of stably maintaining its sliding surface in parallel to a sliding surface of the other sliding component.

### {Solution to Problem}

In order to solve the foregoing problem, a sliding component according to the present invention is a sliding component that is disposed at a relatively rotating position in a rotating machine and slides relatively on a counterpart sliding component, wherein a sliding surface of the sliding component is provided with a fluid introduction groove configured to communicate with at least a side on which a fluid exists, and a dynamic pressure generation groove configured to communicate with the fluid introduction groove and extend in a circumferential direction, and wherein the dynamic pressure generation groove is provided with an uneven portion that repeatedly undulates toward an terminating end of the dynamic pressure generation groove. According to the aforesaid feature of the present invention, the convex portion generates the dynamic pressure until the fluid introduced from the fluid introduction groove into the dynamic pressure generation groove moves toward the terminating end of the dynamic pressure generation groove. Accordingly, one dynamic pressure generation groove can generate the dynamic pressure at a plurality of positions in the circumferential direction. Therefore, the sliding component can stably maintain the sliding surface of the other sliding component in parallel to its sliding surface.

It may be preferable that the uneven portion has a corrugated shape. According to this preferable configuration, since the fluid is guided along the corrugated shape, the pressure loss caused by the uneven portion is decreased.

It may be preferable that a top portion of a convex portion of the uneven portion extends in a radial direction. According to this preferable configuration, the convex portion can generate a dynamic pressure substantially uniformly in the radial direction.

It may be preferable that a side wall of the dynamic pressure generation groove extends in a direction orthogonal to the sliding surface. According to this preferable configuration, the side wall can guide the fluid to the adjacent downstream convex portion. Therefore, the dynamic pressure generation groove not only has a high efficiency of generating the dynamic pressure, but also can smoothly guide the fluid to the terminating end of the dynamic pressure generation groove.

It may be preferable that a convex portion of the uneven portion extends to an opening edge of the dynamic pressure generation groove. According to this preferable configuration, the convex portion generates a high dynamic pressure.

It may be preferable that the fluid introduction groove is a deep groove and communicates with a concave portion of the uneven portion shallower than the deep groove. According to this preferable configuration, the fluid introduction groove can smoothly introduce the fluid into the concave portion. In addition, the convex portion continuous to this concave portion can smoothly generate a dynamic pressure.

It may be preferable that the terminating end of the dynamic pressure generation groove is formed by a slope of which a depth gradually becomes shallower toward a direction in which the dynamic pressure generation groove extends from the fluid introduction groove. According to this preferable configuration, the dynamic pressure generation groove can reliably generate a dynamic pressure at the convex portion and the terminating end of the dynamic pressure generation groove.

### {BRIEF DESCRIPTION OF DRAWINGS}

FIG. 1 is a cross-sectional view schematically illustrating an example of a rotating device to which a sliding component according to a first embodiment of the present invention is applied.
FIG. 2 is a view of a sliding surface of the sliding component according to the first embodiment as viewed from an axial direction.
FIG. 3 is a cross-sectional view taken along a line A-A of FIG. 2.
FIG. 4 is a view illustrating the sliding component at the time of stop using a cross-sectional view taken along a line B-B of FIG. 2.
FIG. 5 is a view illustrating the sliding component at the time of relative rotation using a cross-sectional view taken along a line B-B of FIG. 2.
FIG. 6 is an enlarged perspective view of a main part of the sliding surface of the sliding component according to the first embodiment.
FIG. 7 is a cross-sectional view illustrating a main part of a sliding component according to a second embodiment of the present invention.
FIG. 8 is a cross-sectional view illustrating a main part of a sliding component according to a third embodiment of the present invention.
FIG. 9 is a cross-sectional view illustrating a main part of a sliding component according to a fourth embodiment of the present invention.
FIG. 10 is a cross-sectional view illustrating a main part of a modification example of a sliding component according to the fourth embodiment of the present invention.
FIG. 11 is a view illustrating a main part of a sliding component according to a fifth embodiment of the present invention as viewed from an axial direction.
FIG. 12 is a view illustrating a main part of a modification example of a sliding component according to the fifth embodiment of the present invention.

### {DESCRIPTION OF EMBODIMENTS}

Modes for carrying out a sliding component according to the present invention will be described below with reference to embodiments.

### {First embodiment}

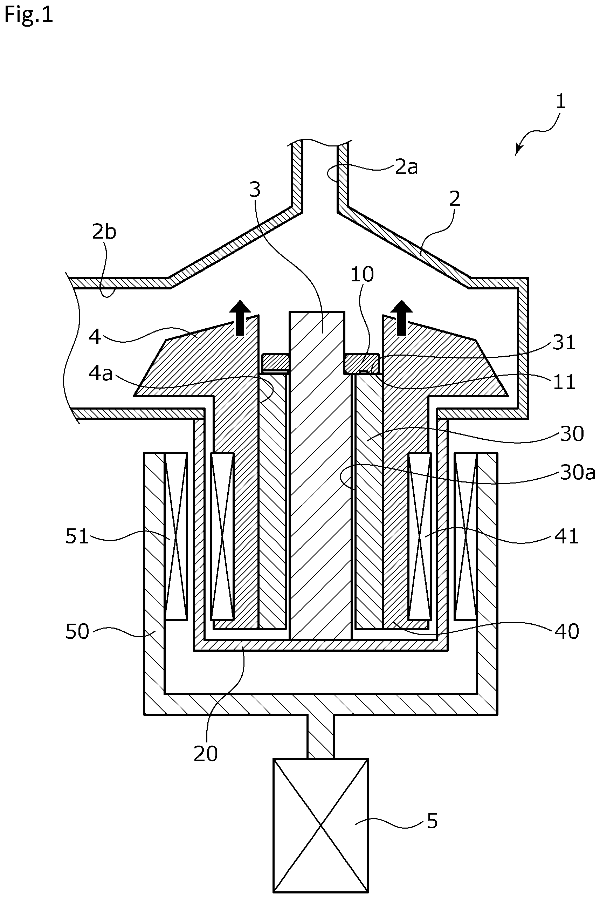

A sliding component according to a first embodiment of the present invention will be described with reference to FIGS. 1 to 6. Furthermore, in this embodiment, a pump will be described as an example of a rotating device to which the sliding component according to the first embodiment is applied.

As illustrated in FIG. 1, a pump 1 pressure-feeds a fluid introduced into a housing 2 through an inflow path 2a, water in this embodiment, through an outflow path 2b. This pump 1 mainly includes the housing 2, a rotation support shaft 3 which is a stationary member, an impeller 4 which is a rotary member, a motor 5, a retaining member 10, and a carbon bearing 30.

The housing 2 has a shape that accommodates the rotation support shaft 3 and the impeller 4. The housing 2 is provided with the inflow path 2a provided on the extension line of the rotation support shaft 3 and the outflow path 2b provided in a direction orthogonal to the inflow path 2a.

The rotation support shaft 3 is immovably fixed to a bottom portion of a bottomed cylindrical portion 20 of the housing 2. Further, the retaining member 10 is externally fitted and fixed to the upper end of the rotation support shaft 3.

The impeller 4 is provided with a shaft hole 4a which penetrates in the axial direction. The carbon bearing 30 which is a sliding bearing is internally fitted and fixed to the shaft hole 4a. The carbon bearing 30 is provided with a shaft hole 30a which penetrates in the axial direction and is formed in a cylindrical shape. The rotation support shaft 3 is inserted through the shaft hole 30a of the carbon bearing 30 and the impeller 4 is axially supported by the rotation support shaft 3 to be rotatable.

Further, a plurality of magnets 41 are fixed to a columnar base portion 40 of the impeller 4.

The motor 5 is disposed outside the housing 2. A bottomed cylindrical rotating body 50 which surrounds the cylindrical portion 20 of the housing 2 is connected to the motor 5. A plurality of magnets 51 are fixed to the rotating body 50 and these magnets 51 are arranged to face the magnets 41. Accordingly, the motor 5 is rotationally driven to rotate the impeller 4.

When a force in the thrust direction is applied to the rotating impeller 4 as indicated by the black arrow in FIG. 1, the carbon bearing 30 comes into contact with the retaining member 10 to prevent the impeller 4 from coming off from the rotation support shaft 3. At this time, a thrust load is applied from the carbon bearing 30 to the retaining member 10.

Accordingly, a sliding surface 11 of the retaining member 10 and the sliding surface 31 of the carbon bearing 30 slide on each other. Due to this relative sliding, a fluid film is formed between the sliding surfaces 11 and 31. Therefore, the sliding surfaces 11 and 31 smoothly slide on each other.

The retaining member 10 is a sliding component of the present invention. Further, the carbon bearing 30 is another sliding component of the present invention. First, the retaining member 10 will be described.

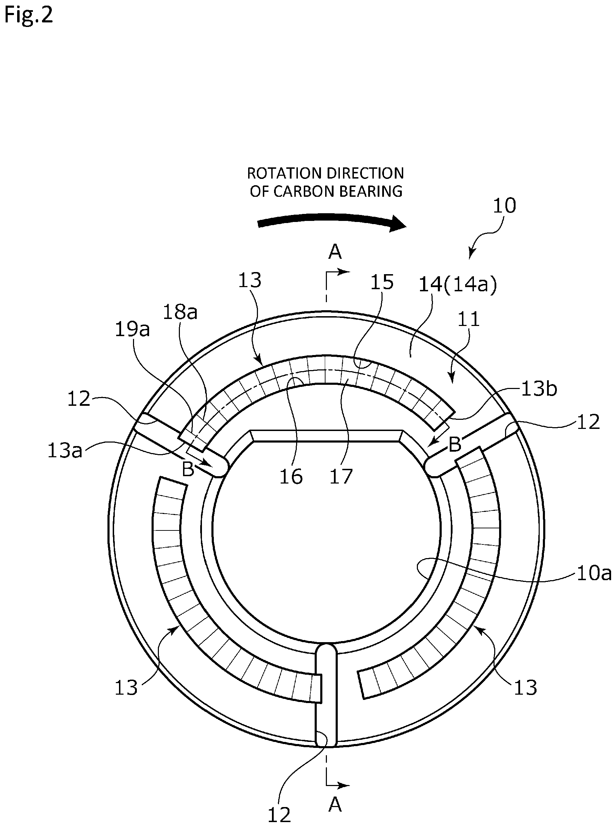

As illustrated in FIG. 2, the retaining member 10 is formed in an annular shape. A D-shaped through-hole 10a is formed at the center of the retaining member 10. This shape matches the end shape of the rotation support shaft 3. Therefore, the rotation of the retaining member 10 relative to the rotation support shaft 3 is restricted.

Furthermore, the retaining member 10 is made of SiC, but the material is not limited thereto, and any sliding material that is used as a sliding component that receives a thrust load can be used.

The sliding surface 11 of the retaining member 10 includes a plurality of deep grooves 12 serving as fluid introduction grooves, a plurality of shallow grooves 13 serving as dynamic pressure generation grooves, and a land 14. In the present specification, it will be described that the sliding surface 11 includes a portion which slides on the carbon bearing 30 and a portion which is a flat surface extending radially inward from this sliding portion. Furthermore, the entire portion of one end surface of the retaining member 10 may slide on the carbon bearing 30.

The deep grooves 12 are arranged at three equal intervals. The shallow grooves 13 are arranged at three equal intervals. The land 14 is a portion other than the deep groove 12 and the shallow groove 13 in the sliding surface 11. Further, the land 14 includes a flat surface 14a which is formed in the same plane. This flat surface 14a is a portion which substantially slides on the sliding surface 31 of the carbon bearing 30. Hereinafter, the deep groove 12 and the shallow groove 13 will be described.

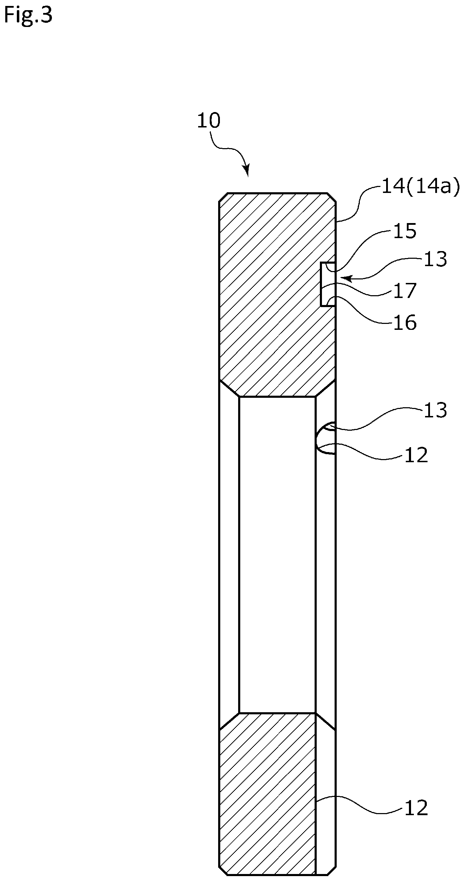

As illustrated in FIGS. 2 and 3, the deep groove 12 extends in the radial direction. Further, the deep groove 12 communicates with at least a side on which a fluid exists. In this embodiment, the deep groove 12 communicates with the outer side and the inner side of the sliding surface 11, respectively. Further, the deep groove 12 is formed into an inverted U-shape when viewed in the radial direction (see FIGS. 3 to 6).

The shallow groove 13 extends in an arc shape along the circumferential direction of the sliding surface 11 from the radial center of the deep groove 12, specifically, from the radially inner diameter side toward the downstream side in the relative rotation direction. Further, the shallow groove 13 includes a starting end 13a which communicates with the deep groove 12 and a closed terminating end 13b.

As illustrated in FIGS. 2 and 3, the shallow groove 13 includes an outer diameter side wall 15, an inner diameter side wall 16, and a floor 17.

As illustrated in FIG. 3, the outer diameter side wall 15 extends to be substantially orthogonal to the flat surface 14a of the land 14, in other words, in a direction orthogonal to the sliding surface 11. The inner diameter side wall 16 extends to be substantially orthogonal to the flat surface 14a of the land 14 similarly to the outer diameter side wall 15. Further, the inner diameter side wall 16 is disposed to face the outer diameter side wall 15 and extends substantially in parallel.

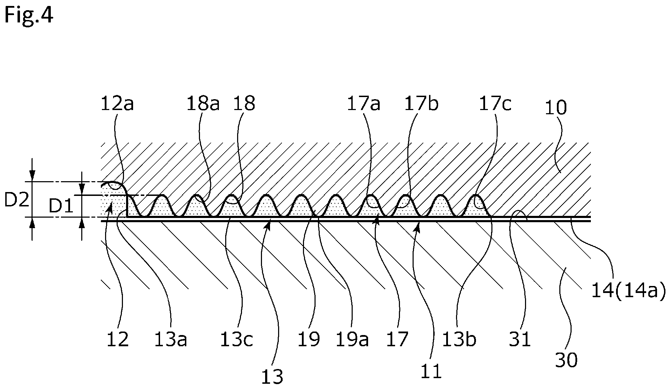

The floor 17 extends in the radial direction to be substantially orthogonal to the side walls 15 and 16. Further, as illustrated in FIG. 4, the floor 17 extends sinusoidally in the circumferential direction.

Specifically, the shallow groove 13 is provided with a plurality of convex portions 19. In other words, the shallow groove 13 has a structure in which a plurality of concave portions 18 and a plurality of convex portions 19 are alternately arranged in the circumferential direction.

The concave portion 18 is a portion which is defined by the side walls 15 and 16 and the floor 17. The depth D1 to a deepest portion 18a of the concave portion 18 is shallower than the depth D2 to a deepest portion 12a of the deep groove 12 (D1 < D2). Furthermore, in FIG. 2, the deepest portion 18a and a top portion 19a to be described later are indicated by thin lines.

Further, as illustrated in FIG. 4, most of the concave portions 18 have an inverted U-shape when viewed in the radial direction with the deepest portion 18a as the bottom. These concave portions 18 are symmetrical with respect to a line (not illustrated) that passes through the deepest portion 18a and extends in the vertical direction of the paper, that is, the axial direction to be orthogonal to the sliding surface 11 and have substantially the same shape.

Further, the concave portion 18 located at the starting end 13a of the shallow groove 13 is formed only on the downstream side in the relative rotation direction with the deepest portion 18a as the bottom. In other words, the deepest portion 18a of the concave portion 18 located at the starting end 13a communicates with the deep groove 12.

The convex portion 19 is a solid portion of which the outer surface is the floor 17. The top portion 19a of the convex portion 19 is a so-called ridge line that extends linearly in the radial direction. Further, the top portion 19a extends to an opening edge 13c of the opening of the shallow groove 13. In other words, the top portion 19a is formed at the same height as the flat surface 14a of the land 14.

Further, most of the convex portions 19 have a U-shape when viewed in the radial direction with the top portion 19a as the top. These convex portions 19 are symmetrical with respect to a line (not illustrated) that passes through the top portion 19a and extends in the vertical direction of the paper, that is, the axial direction to be orthogonal to the sliding surface 11 and have substantially the same shape.

Further, the convex portion 19 located at the terminating end 13b of the shallow groove 13 is formed only on the upstream side in in the relative rotation direction with the top portion 19a as the top. In other words, the convex portion 19 located at the terminating end 13b is continuous to the land 14 located at the downstream side in the relative rotation direction.

Here, specifically, the floor 17 is formed by alternately arranging upstream slopes 17a and downstream slopes 17b. The upstream slope 17a extends from the deepest portion 18a of the concave portion 18 adjacent on the upstream side in the relative rotation direction to the top portion 19a of the reference convex portion 19 with one convex portion 19 as a reference. Similarly, the downstream slope 17b extends from the top portion 19a of the reference convex portion 19 to the deepest portion 18a of the concave portion 18 adjacent on the downstream side in the relative rotation direction. Furthermore, the upstream slope 17a located at the terminating end 13b of the shallow groove 13 is referred to as a terminating end slope 17c.

Subsequently, the sliding surface 31 of the carbon bearing 30 is formed as a flat surface and this flat surface is not provided with a groove or the like. Further, the carbon bearing 30 is made of a material mainly composed of carbon.

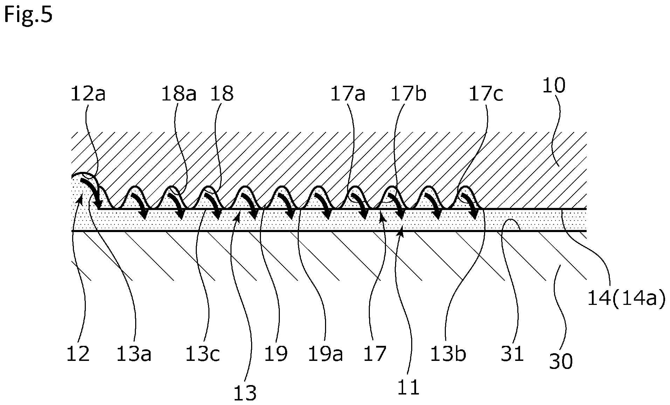

Next, the function of the sliding surface 11 of the retaining member 10 will be described with reference to FIGS. 4 to 6. Furthermore, FIGS. 4 and 5 illustrate a state in which the sliding surfaces 11 and 31 are separated from each other is illustrated in an exaggerated manner.

Further, in this description, the description will be made based on the deepest portion 18a and the top portion 19a with the top and bottom in FIGS. 4 and 5 reversed. Specifically, going from the deepest portion 18a toward the top portion 19a is expressed as going up.

Referring to FIG. 4, the shallow groove 13 does not generate a dynamic pressure and the fluid inside the housing 2 flows into the deep groove 12 from the outer diameter side of the sliding surface 11 in the non-operation state when the impeller 4 is stopped. Further, the fluid is stored in the shallow groove 13. At this time, since the concave portion 18 is minute, the fluid is likely to be stored therein due to surface tension.

When the impeller 4 starts rotating in the operation state, the fluid between the sliding surfaces 11 and 31 is mainly subjected to a shearing force in the circumferential direction, a dynamic pressure is generated in the shallow groove 13, and the sliding surfaces 11 and 31 are slightly separated to become the state illustrated in FIG. 5.

Hereinafter, this will be described in detail. The fluid which flows from the concave portion 18 located at the starting end 13a toward the downstream side generates a dynamic pressure while climbing over the upstream slope 17a located at the concave portion 18, that is, climbing over the convex portion 19 located on the adjacent downstream side in the relative rotation direction as indicated by the arrow in FIG. 5. Accordingly, the sliding surfaces 11 and 31 are separated from each other.

As described above, the top portion 19a of the convex portion 19 is linear. Therefore, the fluid climbing over the convex portion 19 immediately flows inside the concave portion 18 along the downstream slope 17b while being guided by the side walls 15 and 16 located at the concave portion 18 on the adjacent downstream side in the relative rotation direction. In this way, the shallow groove 13 can easily guide the fluid climbing over the convex portion 19 to the concave portion 18 on the adjacent downstream side of the convex portion 19.

On the other hand, if the top portion of the convex portion has a planar shape with a width in the circumferential direction, that is, a configuration in which a land exists between the concave portions unlike this embodiment, the fluid is likely to be dispersed in the radial direction outside the adjacent concave portion when the fluid climbs over the same top portion. Such a configuration in which the land exists between the concave portions does not correspond to the dynamic pressure generation groove of the present invention in which the uneven portion that repeatedly undulates is provided.

Returning to the description of this embodiment, the fluid introduced into the shallow groove 13 flows toward the terminating end 13b while sequentially passing through the concave portion 18 and the convex portion 19 from the starting end 13a in the shallow groove 13. Further, the fluid having reached the terminating end 13b climbs over the terminating end slope 17c located at the terminating end 13b and climbs onto the land 14. That is, each convex portion 19 and the terminating end 13b of the shallow groove 13 can reliably generate a dynamic pressure that relatively separates the sliding surface 31 of the carbon bearing 30.

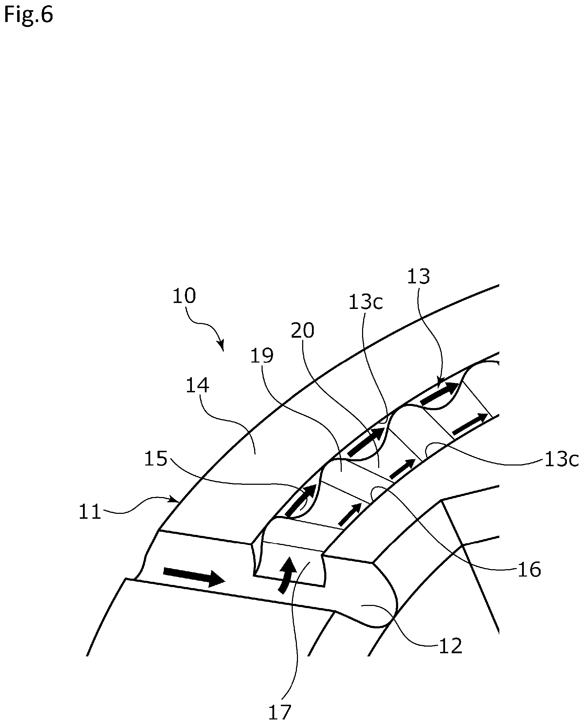

Here, since the deep groove 12 communicates with the shallow groove 13, the fluid can be easily supplied from the deep groove 12 to the shallow groove 13 when the fluid receives a shearing force toward the downstream side in the circumferential direction. Further, in this embodiment, as illustrated in FIGS. 5 and 6, the deep groove communicates with the concave portion 18 located at the starting end 13a of the shallow groove 13. Accordingly, the fluid can be smoothly introduced from the deep groove 12 to the concave portion 18 located at the starting end 13a.

As described above, the retaining member 10 of this embodiment generates a dynamic pressure in each convex portion 19 until the fluid introduced from the deep groove 12 into the shallow groove 13 moves toward the terminating end 13b of the shallow groove 13. Accordingly, one shallow groove 13 can generate the dynamic pressure at a plurality of positions in the circumferential direction. Therefore, the retaining member 10 can stably maintain the sliding surface 31 of the carbon bearing 30 to be separated substantially in parallel to its sliding surface 11.

Further, the concave portion 18 and the convex portion 19 of the shallow groove 13 have a corrugated shape due to the floor 17 in the shallow groove 13 formed in a sinusoidal shape. Therefore, the fluid flowing in the shallow groove 13 is guided along the corrugated floor 17. Accordingly, the fluid flowing in the shallow groove 13 is less prone to turbulence due to sudden height differences and the like. For this reason, the pressure loss caused by the concave portion 18 and the convex portion 19 is small.

Further, the top portion 19a of the convex portion 19 extends in the radial direction as described above. Therefore, the convex portion 19 can generate a dynamic pressure substantially uniformly in the radial direction.

Further, as described above, the side walls 15 and 16 of the shallow groove 13 can guide the fluid to the adjacent downstream convex portion 19. Therefore, the shallow groove 13 not only has a high efficiency of generating the dynamic pressure, but also can smoothly guide the fluid to the terminating end 13b of the shallow groove 13.

Further, in the shallow groove 13, the dynamic pressure that is increased when climbing over the convex portion 19 also becomes difficult to escape to the outside of the shallow groove 13.

On the other hand, in the configuration in which the land exists between the concave portions unlike this embodiment, the dynamic pressure that is increased when climbing over the convex portion is likely to escape to the outside of the near concave portion. Therefore, it is conceivable that a sufficient dynamic pressure cannot be obtained in the same concave portion. For this reason, the shallow groove 13 of this embodiment can efficiently generate the dynamic pressure in each convex portion 19 and the terminating end 13b.

Further, the top portion 19a of the convex portion 19 extends to the opening edge 13c of the shallow groove 13. Therefore, the fluid climbing over the convex portion 19 is more efficiently sent out toward the sliding surface 31 of the carbon bearing 30 than the sliding surface 11 of the retaining member 10.

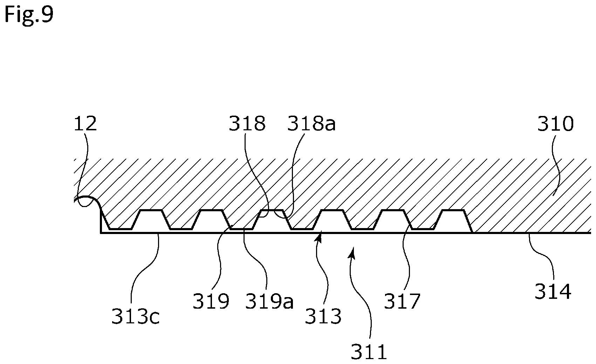

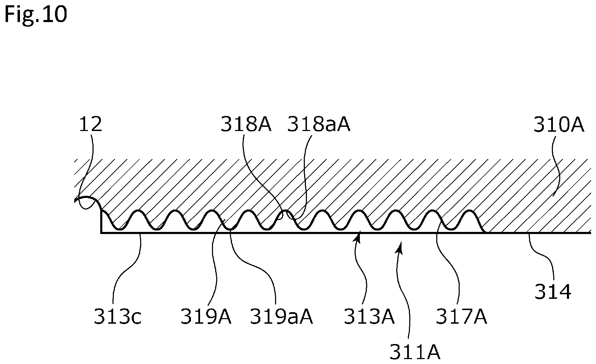

On the other hand, when the top portion of the convex portion is further separated from the opening edge of the shallow groove toward the deepest portion (see FIGS. 9 and 10 as an example) unlike this embodiment, the amount of the fluid sent toward the sliding surface 31 of the carbon bearing 30 is reduced compared to the sliding surface of the retaining member. For this reason, the convex portion 19 of this embodiment can generate a high dynamic pressure.

Further, since the top portion 19a of the convex portion 19 extends to the opening edge 13c of the shallow groove 13, the volume of the concave portion 18 sandwiched between the adjacent convex portions 19 is increased. Therefore, the amount of the fluid stored in the concave portion 18 increases. Accordingly, the shallow groove 13 can prevent poor lubrication from occurring even immediately after relative sliding between the sliding surfaces 11 and 31 starts.

Further, the fluid is smoothly and directly introduced from the deep groove 12 to the concave portion 18 located at the starting end 13a. Accordingly, the shallow groove 13 can reliably generate a dynamic pressure on the side of the starting end 13a. Therefore, the shallow groove 13 may efficiently introduce the fluid to the terminating end 13b.

Further, the top portion 19a of the convex portion 19 in the shallow groove 13 is continuous to the flat surface 14a of the land 14. Therefore, the top portion 19a can function as a substantially sliding portion. Accordingly, the sliding surface 11 can disperse a surface pressure acting on itself.

Further, since the deep grooves 12 and the shallow grooves 13 are arranged at a plurality of equal intervals, the fluid is easily introduced to the terminating end 13b of each shallow groove 13. On the other hand, in the configuration in which only one set of the deep groove and the shallow groove is formed and the shallow groove extends to the vicinity of the upstream side of the deep groove unlike this embodiment, the amount of the fluid introduced to the terminating end is likely to be reduced compared to the amount of the fluid introduced to the terminating end 13b of the shallow groove 13. Therefore, it is possible to efficiently generate the dynamic pressure in each shallow groove 13 by arranging the plurality of deep grooves 12 and shallow grooves 13.

Further, since the other concave portions 18 except for the most upstream concave portion 18 have the same shape and the convex portions 19 except for the most downstream convex portion 19 also have the same shape, the dynamic pressure generated at each convex portion 19 can be easily maintained approximately constant and furthermore, the dynamic pressure generation regions can be approximately equally distributed. Accordingly, the retaining member 10 can more stably maintain the sliding surface 31 of the carbon bearing 30 to be separated substantially in parallel to its sliding surface 11.

Further, since the deepest portion 18a and the top portion 19a are linear, more convex portions 19 can be formed compared to a case in which the deepest portion and the top portion have a planar shape (see FIG. 9 as an example) unlike this embodiment. Accordingly, since it is possible to more densely arrange the dynamic pressure generation regions, the sliding surface 31 of the carbon bearing 30 can be more stably maintained to be separated substantially in parallel to its sliding surface 11.

Further, the sliding component of the present invention is the retaining member 10. The retaining member 10 is less likely to wear out than the carbon bearing 30. Therefore, the retaining member 10 is suitable as a mating material for the carbon bearing 30.

### {Second embodiment}

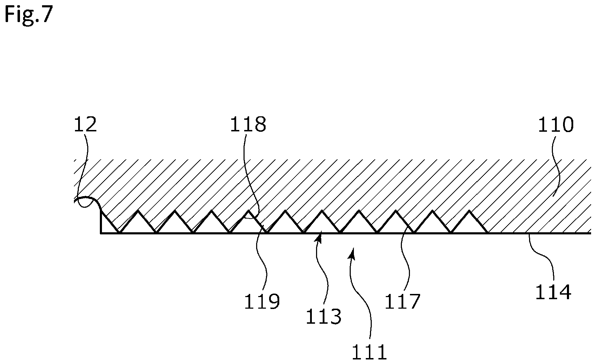

Next, a sliding component according to a second embodiment of the present invention will be described with reference to FIG. 7. Furthermore, the description of the same configuration and overlapping configuration as in the first embodiment will be omitted.

A sliding surface 111 of a retaining member 110 of the second embodiment includes the deep groove 12, a shallow groove 113, and a land 114. A floor 117 of the shallow groove 113 is formed in a corrugated shape in which an isosceles triangle (on the side of a deepest portion of a concave portion 118) and an inverted isosceles triangle (on the side of a top portion of a convex portion 119) are continuous.

Even in such a configuration, the concave portion 118 and the convex portion 119 of the shallow groove 113 are formed in a corrugated shape. Therefore, the fluid flowing in the shallow groove 113 is guided along the corrugated shape. For this reason, the pressure loss caused by the concave portion 118 and the convex portion 119 is decreased. That is, the shape of the uneven portion of the shallow groove may be changed as appropriate as long as the uneven portion has a line-symmetrical shape with respect to a line that passes through the top portion or the deepest portion and extends in the axial direction to be orthogonal to the sliding surface. Further, when one top portion is used as a reference, the deepest portion on the adjacent upstream side in the relative rotation direction and the deepest portion on the same adjacent downstream side are preferably connected in a linear shape or a curved shape.

### {Third embodiment}

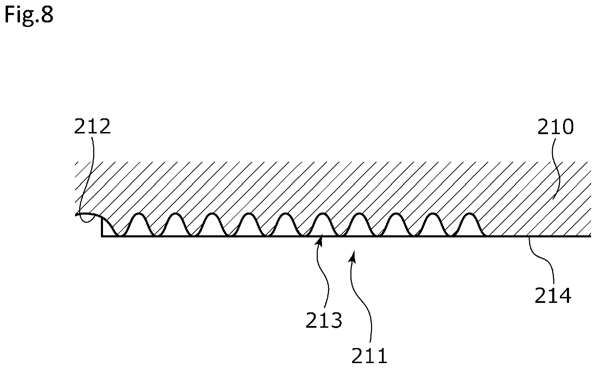

Next, a sliding component according to a third embodiment of the present invention will be described with reference to FIG. 8. Furthermore, the description of the same configuration and overlapping configuration as in the first embodiment will be omitted.

A sliding surface 211 of a retaining member 210 of the third embodiment includes a fluid introduction groove 212, a dynamic pressure generation groove 213, and a land 214. The fluid introduction groove 212 is formed to have the same depth as the shallow groove 13 of the first embodiment. The dynamic pressure generation groove 213 is the same as the shallow groove 13 of the first embodiment. Even in such a configuration, the fluid can be guided to the dynamic pressure generation groove 213 through the fluid introduction groove 212. That is, the fluid introduction groove may not be deeper than the dynamic pressure generation groove.

### {Fourth embodiment}

Next, a sliding component according to a fourth embodiment of the present invention will be described with reference to FIG. 9. Furthermore, the description of the same configuration and overlapping configuration as in the first embodiment will be omitted.

A sliding surface 311 of a retaining member 310 of the fourth embodiment includes the deep groove 12, a shallow groove 313, and a land 314. A floor 317 of the shallow groove 313 is formed in a corrugated shape in which an isosceles trapezoid (on the side of a deepest portion 318a of a concave portion 318) and an inverted isosceles trapezoid (on the side of a top portion 319a of a convex portion 319) are continuous. Accordingly, the top portion 319a of the convex portion 319 becomes a flat surface. On the other hand, the top portion 319a is further separated from an opening edge 313c of the shallow groove 313 toward the deepest portion 318a of the concave portion 318.

Accordingly, when the fluid flowing in the shallow groove 313 rides on the top portion 319a of the convex portion 319, the fluid is guided to the downstream concave portion 318 by the side wall of the shallow groove 313. In this way, when the fluid can smoothly move from the concave portion to the next concave portion, the shape of the top portion of the convex portion and the axial dimension of the sliding surface may be changed as appropriate.

Furthermore, as in a sliding surface 311A of a retaining component 310A illustrated in FIG. 10, a floor 317A of the shallow groove 313A may be formed in a sinusoidal shape as in the first embodiment and a top portion 319aA of a convex portion 319A may be separated from an opening edge 313c toward a deepest portion 318aA of the concave portion 318A. In such a configuration, it is possible to improve the efficiency of introducing the fluid toward the terminating end compared to the first embodiment.

### {Fifth embodiment}

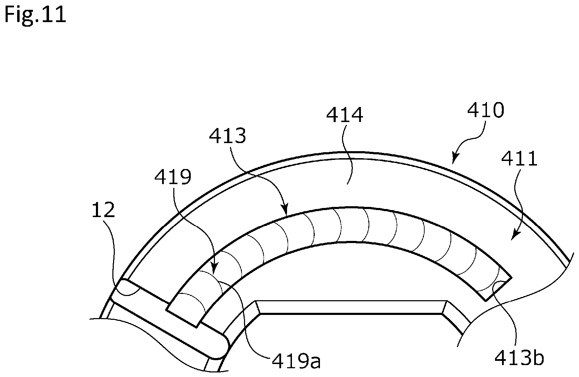

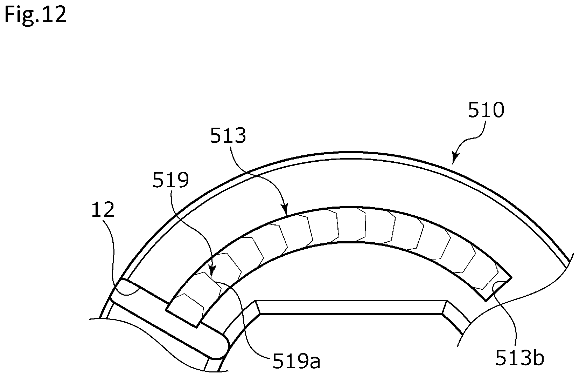

Next, a sliding component according to a fifth embodiment of the present invention will be described with reference to FIGS. 11 and 12. Furthermore, the description of the same configuration and overlapping configuration as in the first embodiment will be omitted.

A sliding surface 411 of a retaining member 410 of the fifth embodiment includes the deep groove 12, a shallow groove 413, and a land 414. A top portion 419a of a convex portion 419 of the shallow groove 413 has a curved shape that protrudes toward a terminating end 413b of the shallow groove 413 as it goes toward the center in the radial direction. In such a configuration, since the convex portion 419 can easily guide the fluid toward the center in the radial direction of the shallow groove 413, it is possible to more reliably guide the fluid toward the downstream adjacent concave portion. Furthermore, the concave portion and the deepest portion thereof are not illustrated in FIG. 11.

Furthermore, as in a retaining component 510 illustrated in FIG. 12, a top portion 519a of a convex portion 519 of a shallow groove 513 may have a trapezoidal shape that protrudes toward a terminating end 513b of the shallow groove 513. Furthermore, the concave portion and the deepest portion thereof are not illustrated in FIG. 12.

In this way, the shape of the top portion of the convex portion may be changed as appropriate if the top portion spans each side wall of the shallow groove. Further, the bottom may extend at an angle in the radial direction or may extend in a curved manner in the radial direction. These also apply to the deepest portion of the concave portion.

Although the embodiments of the present invention have been described above with reference to the drawings, the specific configuration is not limited to these embodiments, and any changes or additions that do not depart from the gist of the present invention are included in the present invention.

For example, in the first to fifth embodiments, although it has been described that the mating material of the carbon bearing is the sliding component, the present invention is not limited thereto and the mating material may be a sliding bearing or one sliding component constituting a thrust bearing. Further, the pair of sliding components including the sliding surfaces of the embodiment may be arranged to face each other. Further, from the viewpoint of maintaining the shape of the convex portion in the shallow groove for a long time, it is preferable to provide the shallow groove in a sliding component that is less likely to change over time due to wear or the like, for example, a hard sliding component.

Further, in the first to fifth embodiments, although it has been described that the dynamic pressure generation groove extends only to the downstream side of the circumferential direction, the present invention is not limited thereto and the dynamic pressure generation groove may also extend to the upstream side of the circumferential direction. In such a configuration, a fluid film can also be formed during reverse rotation.

Further, in the first to fifth embodiments, although it has been described that the dynamic pressure generation groove extends in the circumferential direction of the sliding surface, the present invention is not limited thereto. If the dynamic pressure generation groove extends in the circumferential direction, the dynamic pressure generation groove may be inclined in the radial direction or a part thereof may be bent in the radial direction. If at least the circumferential component is provided, the shape may be changed as appropriate.

Further, in the first to fifth embodiments, although it has been described that the dynamic pressure generation groove is provided along the same circular shape, the present invention is not limited thereto and the dynamic pressure generation groove may be provided at different phases in the radial direction.

Further, in the first to fifth embodiments, although it has been described that the plurality of fluid introduction grooves and dynamic pressure generation grooves are provided, the present invention is not limited thereto and only one of each may be formed. Even in such a configuration, it is possible to generate a dynamic pressure at a plurality of positions of one shallow groove.

Further, in the first to fifth embodiments, although it has been described that the fluid inside the housing flows into the fluid introduction groove from the outer diameter side of the sliding surface, the present invention is not limited thereto and the fluid inside the housing may flow thereinto from the inner diameter side of the sliding surface. For this reason, although it has been described that the fluid introduction groove communicates with each of the outside and the inside of the sliding surface, the present invention is not limited thereto and the fluid introduction groove may communicate with only one side of the outer diameter side and the inner diameter side.

Similarly, when the sliding surface of the sliding component and the sliding surface of the other sliding component overlap each other, for example, when the sliding surface of the sliding component has a larger diameter than the sliding surface of the other sliding component, a portion located on the outer diameter side of the sliding surface of the other sliding component in the fluid introduction groove opens in the axial direction and hence the fluid may be introduced from the opening portion. For this reason, the fluid introduction groove may not communicate with each of the outer diameter side and the inner diameter side of the sliding surface if the fluid introduction groove opens to introduce the fluid inside the housing.

Further, in the first to fifth embodiments, although it has been described that the top portion as the apex is disposed at the lower position, the present invention is not limited thereto and the top portion as the apex may be located at the upper position by reversing the top and bottom in FIGS. 4 and 5.

Further, in the first to fifth embodiments, although it has been described that the convex portion has a line-symmetrical shape with respect to a line that passes through the top portion and extends in the axial direction to be orthogonal to the sliding surface, the present invention is not limited thereto and the convex portion may not have a line-symmetrical shape. Further, the convex portion may be inclined toward the upstream side or the downstream side.

Further, in the first to fifth embodiments, although it has been described that the plurality of convex portions are provided inside the dynamic pressure generation groove, the present invention is not limited thereto and only one convex portion may be provided.

Further, in the first to fifth embodiments, although it has been described that the plurality of concave portions have the same shape, the present invention is not limited thereto. For example, the volume of the concave portion may increase or decrease as it goes toward the downstream side and the concave portion may have different shapes. This also applies to the convex portions.

### {REFERENCE SIGNS LIST}

3 Rotation support shaft (stationary member)
4 Impeller (rotary member)
10 Retaining member (sliding component)
11 Sliding surface
12 Deep groove (fluid introduction groove)
13 Shallow groove (dynamic pressure generation groove)
13a Starting end
13b Terminating end
13c Opening edge
15, 16 Side wall
17c Terminating end slope (slope of which depth gradually becomes shallower)
18 Concave portion
19 Convex portion
19a Top portion
30 Carbon bearing (counterpart sliding component)
31 Sliding surface
110 to 510 Retaining member (sliding component)
111 to 411 Sliding surface
113, 313 to 513 Shallow groove (dynamic pressure generation groove)
118, 318, 318A Concave portion
119, 319 to 519 Convex portion
212 Fluid introduction groove
213 Dynamic pressure generation groove
313c Opening edge
319a to 519a Top portion
413b, 513b Terminating end
D1 Depth
D2 Depth

## Claims

1. A sliding component that is disposed at a relatively rotating position in a rotating machine and slides relatively on a counterpart sliding component,
wherein a sliding surface of the sliding component is provided with a fluid introduction groove configured to communicate with at least a side on which a fluid exists, and a dynamic pressure generation groove configured to communicate with the fluid introduction groove and extend in a circumferential direction, and
wherein the dynamic pressure generation groove is provided with an uneven portion that repeatedly undulates toward an terminating end of the dynamic pressure generation groove.

2. The sliding component according to claim 1,
wherein the uneven portion has a corrugated shape.

3. The sliding component according to claim 1,
wherein a top portion of a convex portion of the uneven portion extends in a radial direction.

4. The sliding component according to claim 1,
wherein a side wall of the dynamic pressure generation groove extends in a direction orthogonal to the sliding surface.

5. The sliding component according to claim 1,
wherein a convex portion of the uneven portion extends to an opening edge of the dynamic pressure generation groove.

6. The sliding component according to claim 1,
wherein the fluid introduction groove is a deep groove and communicates with a concave portion of the uneven portion shallower than the deep groove.

7. The sliding component according to any one of claims 1 to 6,
wherein the terminating end of the dynamic pressure generation groove is formed by a slope of which a depth gradually becomes shallower toward a direction in which the dynamic pressure generation groove extends from the fluid introduction groove.
